# EUROPEAN PATENT APPLICATION

(11) **EP 4 621 469 A1**
(43) Date of publication of application: **24.09.2025**
(21) Application number: 24165330.2
(22) Date of filing: 21.03.2024
(51) Int. Cl.: G02B 21/06, G02B 21/36, G02B 21/00

(54) **METHODS FOR OPERATING A LIGHT SHEET MICROSCOPE AND DEVICES THEREFORE**

(71) Applicant: Leica Microsystems CMS GmbH, 35578 Wetzlar (DE)
(72) Inventor: Ritschel, Kai, 35578 Wetzlar (DE); Beljan, Mate, 35578 Wetzlar (DE); Timmesfeld, Florian, 35578 Wetzlar (DE)
(74) Representative: Paustian & Partner Patentanwälte mbB

(57) **Abstract**

A first aspect of the present disclosure is related to a method for operating a light sheet microscope,
comprising the steps:
- capturing an image of a volume in a camera space by exciting the volume with one or more light sheets that are oblique relative to an optical axis of a primary lens of a microscope and that are emitted at different positions in the volume and by capturing a light sheet image for each of the one or more exciting light sheets;
- transforming the captured image from the camera space to a user space , by mapping information from one or more light sheet images to one or more single-view focus planes ;
- displaying the volume in the user space at a user interface;
- receiving a selection information in the user space from the user interface about a part of the volume ;
- retransforming the selection information from the user space to the camera space to control the microscope capturing an image based on the selection information ;
- capturing a selected image about the part of the volume .

## Description

### Technical Field

This disclosure relates to methods for operating a light sheet microscope. Also disclosed are devices such as light sheet microscopes and devices that are configured to interact with light sheet microscopes.

### Background

A light sheet microscope is a fluorescence microscopy technique that illuminates a sample with one or more sheets of light different to the direction of observation (i.e. an optical axis of a primary lens). This approach allows for an imaging of a variety of specimens, such as embryos or organoids, with minimal photodamage and photobleaching compared to traditional point-scanning methods. By selectively illuminating a thin slice of the specimen at a time, it can achieve high-resolution images with improved contrast and depth. However when using oblique light sheets the resulting image is not intuitively intelligible for a user. This can affect an operation of such a device. Improvements are therefore desired.

### Summary

An object of the present disclosure is to improve working with a light sheet microscope.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a method for operating a light sheet microscope,
comprising the steps:
- capturing an image of a volume in a camera space by exciting the volume with one or more light sheets that are oblique relative to an optical axis of a primary lens of a microscope and that are emitted at different positions in the volume and by capturing a light sheet image for each of the one or more exciting light sheets;
- transforming the captured image from the camera space to a user space , by mapping information from one or more light sheet images to one or more single-view focus planes ;
- displaying the volume in the user space at a user interface;
- receiving a selection information in the user space from the user interface about a part of the volume ;
- retransforming the selection information from the user space to the camera space to control the microscope capturing an image based on the selection information ;
- capturing a selected image about the part of the volume .

A light sheet microscope is configured to illuminate a sample with a sheet of light (a light sheet) from a side. In particular, one or more light sheets can be emitted such that they intersect an imaging plane of a detection lens. A light sheet microscope can be a fluorescence microscope. Light sheet microscopy allows for selective illumination of a thin section of a sample, thereby minimizing damage and photobleaching of the sample outside the focal plane. Furthermore, it can enable high-resolution and/or three-dimensional imaging of sample volumes, in particular of live specimen.

A volume can be any specimen or part of a specimen that can be subject to analysis by a light sheet microscope. A volume can be in particular a part of a specimen that is specified in a user space. A volume is subject to sampling by exciting the volume with a plurality of light sheets at different positions or by a moving a light sheet, and then capturing light emitted from the volume by a sensor, such as a camera. A sampled volume yields a volumetric data set in a camera space.

A camera space is a space in which a camera (or a plurality of cameras) captures a specimen. A camera space represents "what the systems sees" or "what the system can see". An image in a camera space can comprise a plurality of image parts, wherein each part is related to a particular light sheet and/or on a particular light sheet position (e.g. in case of a moving light sheet). An image resulting from an excitation with a particular light sheet is also called light sheet image. Each light sheet image represents a sample point of the total image. For example, an image can be sampled by capturing ten consecutive light sheet images of a specimen through a microscope objective, wherein a light sheet continuously moves over the sample volume. In this case, for each light sheet image, the moving light sheet has illuminated a different part of the sample volume. This yields a different light sheet detection plane for each light sheet image. For capturing a plurality of light sheet images also a rolling shutter can be used.

A user space is a space in which a user (or another entity) can perceive or receive a sampled specimen on a more natural form. A camera "sees" the image in camera space and therefore samples an image by light sheets that are non-parallel (e.g. oblique) to an optical axis of a camera lens. I.e. by capturing an image by a plurality of light sheet images, a camera "sees" a volume from a plurality of viewpoints. Therefore, depicting a total image in camera space is not suitable for a human user or an entity that seeks to further process the image in a user-based single view reference frame. A user space is therefore a transformation of a camera space (or of an image captured in camera space) that is more intuitive for a user. To transform an image from camera space to user space, i.e. to determine an image of a sampled volume/specimen in a user space, information from different sample points (i.e. from different light sheet images) are transformed to one or more single-view focal planes. A two-dimensional image can be generated by transforming information from a plurality of sample points to a single-view focal plane. A three-dimensional image can be generated by transforming information from a plurality of sample points to a plurality of single-view focal planes.

A user interface or also human system interface can be an interface at the microscope and/or at another device that is in communication with a microscope or at least can receive data from a microscope.

A selection information relates to an information in a user space, e.g., about an analyzed sample volume. A selection information can be a two-dimensional information and/or a three-dimensional information. A selection information can be obtained over a user interface, e.g. by being provided by a user. Additionally or alternatively, a selection information can be provided automatically, e.g. by a feature identification algorithm. For example, a feature identification algorithm can provide a selection information and the information is displayed to a user within an image of a sampled volume in a user space. In this case, a user can confirm, amend, and/or delete a suggested selection information.

Based on the selection information, parameters for the microscope (i.e. parameters in camera space) can be obtained to sample a corresponding image (in camera space). These parameters can be based on further parameters, such as sampling resolution, exposure time, sampling width, etc. Parameters for the microscope can be obtained by taking an inverse of a transformation from camera space to user space. Based on the information in the camera space, the microscope can be controlled such that the selected information can be sampled from the volume.

By providing a sampled information to a user in a transformed way (i.e. in user space), the person using the microscope can operate similar to a normal widefield microscope and can intuitively select information from a sampled volume for further analysis. An advantage of the first aspect is that an oblique raw data volume can be set up directly during an acquisition to enable the user to work with a conventional 3D visualization of a sample and not to obtain this only in post-processing. In one special embodiment a creation of a volume representation can be performed as follows:
1) Automatic recording of a specimen volume;
2) Erecting the volume and displaying it for a user in an HSI, thereby:
2.1) displaying a 3D-image;
2.2) displaying a x/z-projection;
2.3) displaying a y/z-projection (or an x/y projection);
3) Selecting of rectangles in the 2D projections of the relevant region;
4) Retransforming the selected ROI by calculating the ROI back into the recording coordinate system;
5) Determining the ROI in camera space;
6) Determining a range of a sampling means, such as a galvanometric mirror;
7) Determining a minimum and a maximum speed of the sampling means based on a given the exposure time;
7.1) If necessary, adjust the exposure time based on minimum/optimum of the speed of the sampling means;
8) Consider different modes of the sampling means if applicable, e.g. continuous vs. triggered, and compare their outcomes.

A user can thus interact with a conventional 3D volume in an Cartesian system without being obliged to consider the technology of a light sheet microscope, i.e. complex mathematical operations and relationships for optimal parameters. Thereby, a user can obtain a best possible volume with ideal sampling settings. Previously projected regions can be updated to visualize parameter changes compared to existing settings and to visually evaluate effects based on a previously recorded volume without re-exposing a sample, thereby reducing photo-stress to a specimen.

An embodiment of the first aspect of the present disclosure is related to a method for operating a light sheet microscope,
wherein the camera space is based on the one or more of light sheets that are oblique with a pre-defined angle φ to an optical axis of a primary lens, which captures light from the volume.

By using a sample pattern of oblique light sheets, the light sheet microscope can operate with a single primary lens (the lens that is right in front of the specimen) for emitting light sheets and capturing reflected light from the volume.

An embodiment of the first aspect of the present disclosure is related to a method for operating a light sheet microscope,
wherein the one or more light sheets are emitted in a regular position-based pattern.

A regular position-based pattern can be formed by a plurality of light sheets that are emitted essentially parallel and/or wherein two adjacent light sheets always have a same distance. In case a single light sheet is used that moves through a volume, a regular position-based pattern can be formed by a constant velocity of the light sheet. Using a regular position-based sampling pattern can provide a simple and effective sampling means.

An embodiment of the first aspect of the present disclosure is related to a method for operating a light sheet microscope,
wherein the one or more light sheets are emitted in a non-regular position-based pattern.

A non-regular position-based pattern can be formed by a plurality of light sheets that are emitted with differing distances between two adjacent light sheets. In case a single light sheet is used that moves through a volume, a non-regular position-based pattern can be formed by a changing velocity of the light sheet. Using a non-regular position-based sampling pattern can be used for a sampling pattern adapted to a complexity of a specimen volume, e.g. parts with a higher complexity can be sampled with more light sheets than parts with less complexity.

An embodiment of the first aspect of the present disclosure is related to a method for operating a light sheet microscope,
wherein the user space is based on one or more of the parameters:
- an angle between a light sheet and an optical axis of a primary lens;
- a distance between two adjacent light sheets;
- a velocity with which the volume is sampled based on one or more light sheets.

A goal of a user space is to display a volume/specimen as if the user would see it through a widefield microscope. Therefore, the information captured in camera space needs to be transformed adequately to map the different dimensions introduced by the light-sheet-based sampling into a consistent single-view two- or three-dimensional user space.

A respective transformation can be based on an angle that emitted light sheets have to the optical axis of the primary lens, e.g. based on an angle, sample points (i.e. images of a specimen generated based on different light sheets) can be selected that provide information for a specific point in a user space.

Additionally or alternatively, a transformation from a camera space to a user space can also be based on a distance between two adjacent light sheets. For example, in case a distance of two adjacent light sheets is rather small, e.g. < 20 µm, a point in user space which is located between the two light sheets can be generated by merging the information for this position of both light sheet images generated based on the two light sheets. Alternatively, a certain point in a user space can be based on a respective point of an image (in camera space) which is based on the closest light sheet (e.g. the light sheet that has the smallest distance to this point).

Additionally or alternatively, a transformation from a camera space to a user space can also be based on a sample velocity. For example, a light sheet can be moved through a volume with a pre-defined velocity. The velocity can be essentially constant, e.g. 10 ns for a whole sample line (line by which a volume/specimen is sampled) in case a rolling shutter is used.

Controlled velocity-based illumination of a specimen volume can be done to achieve a certain exposure time. For longer exposure time and in case a single moving light sheet is used, a light sheet needs to move with a slower speed through a volume than for a shorter exposure time. Additionally or alternatively, needed or intended exposure time can vary depending on a position of a light sheet at a specimen. Then the velocity of the light sheet needs to be adapted for the desired exposure time. A duration with which a light sheet illuminates a volume can vary dependent on a position of the light sheet. Based on this function a velocity of the means by which the one or more light sheets are moved through the volume/specimen can be determined. Such a means can be a galvanometer-based mirror. Additionally or alternatively, such a means can be a moving specimen holder.

An embodiment of the first aspect of the present disclosure is related to a method for operating a light sheet microscope,
comprising the step:
- transforming information from camera space to user space such an emitted light sheet and a focal plane of a user space differ about an angle smaller than 90°.

The system "sees" the volume through different images that are based on a plurality of oblique light sheets. Therefore, the system sees the volume by a perspective that differs in a pre-defined angle. In order to transform the information to a user space, i.e. a single view perspective, the camera space information needs to be transformed to compensate for the angle that the light sheets have relative to a user's axis of view. This can also be referred to as "erection" of the information in camera space to achieve a perspective of the illuminated volume in a user space.

Such an "erection" performed, e.g. by a transformation matrix that assigns to each pixel captured in camera space a pixel in user space. Thereby either a selection of one or more pixels from camera space can be applied.

Additionally or alternatively, a plurality of pixels in camera space can be interpolated to determine a pixel in user space. Thereby, the pixels of the specimen volume in camera space is moved into a new position and thereby "erected". A transformation can comprise one or more filters in order to remove artefacts from the image in user space.

A calibration of an angle between camera space and user space can differ, e.g. for a single device and/or across different devices. A calibration can therefore be performed in order to control for a pre-defined angle between camera space and user space. This will especially be needed for the combination of continuous galvo movement and use of rolling shutter in the camera to increase acquisition speed. A calibration can be software controlled. The aim is to detect and correct errors caused by lens aberrations, for example. For performance reasons, a calibration can be carried out in one step.

An embodiment of the first aspect of the present disclosure is related to a method for operating a light sheet microscope,
comprising the steps:
- mapping the user space in a three-dimensional Cartesian coordinate system;
- displaying an xy-plane of the coordinate system, in particular as a maximum intensity projection;
- receiving a selection of a user within the xy-plane.

A user space can be mapped in a Cartesian coordinate system with the dimensions x, y, z.

A maximum intensity projection is a technique used in imaging, particularly in medical imaging, to visualize high-intensity structures within a specimen volume. This method can project voxels with the highest intensity value along a particular viewing direction or in a particular plane. A display of a first plane of a coordinate system can be performed through a maximum intensity projection. In one example, an xy-plane can be defined on a side of the sampled specimen. Then the voxels of the sampled specimen with the highest intensity can be depicted in the xy-plane. This can lead to an enhanced orientation of the user. Additionally or alternatively, an xy-plane can be configured to be movable by a user via a human system interface. In this way, a user can position an xy-plane as desired, also within a sampled specimen, and the intersecting parts of the sampled volume are highlighted.

A coordinate system can be aligned to a camera system of the microscope. In particular, an axis of the coordinate system can be parallel of a sampling direction, i.e. the direction in which a volume is sampled by one or more light sheets. This can facilitate a retransformation of a user selection from user space to camera space. For example, a distance of a user selection can specify a movement range of a galvanometer-based mirror in order to sample the selected volume.

An embodiment of the first aspect of the present disclosure is related to a method for operating a light sheet microscope,
comprising the steps:
- mapping the user space in a three-dimensional Cartesian coordinate system;
- displaying an xz-plane of the coordinate system, in particular as a maximum intensity projection;
- receiving a selection information of a user within the xz-plane.

An xz-projection defines a plane perpendicular to an XY-projection in a Cartesian coordinate system. An xz projection can be generated and displayed to a user in the same way as described for the XY-projection of the preceding embodiment. This embodiment can be in particular combined with the preceding embodiment in order to select a volume. A selection information can be automatically generated based on an intersection of a selected XY-plane and a selected xz-plane. A selection can be retransformed to a camera space directly. Alternatively, further processing can be performed before a transformation is conducted, e.g. it can be checked if a selected volume can be captured by the camera system of the microscope used.

By selecting a certain volume within a sample volume a region of interest (ROI) can be determined in camera space. By only sampling the defined region of interest a sampling process can be accelerated.

An embodiment of the first aspect of the present disclosure is related to a method for operating a light sheet microscope,
wherein one or more parameters of a microscope, in particular a light sheet sampling range, is depicted in the user space.

If a technical parameter in a galvanometric mirror is changed, this can be reflected in the user space. For example, this can be reflected in the user space by updating one or more user selected regions of interest (ROIs) in the projections to represent the changes made from the previously calculated parameter set. A changes of a size of the camera ROI, will lead to a change of ROI in corresponding projection (in user space). A change to a step size of a galvanometric mirror may update a number of sample steps and/or a ROI in a corresponding projection. In case a starting and/or ending point of a scan range is changed in camera space, a potential volume that can be sampled may change its size in user space.

An embodiment of the first aspect of the present disclosure is related to a method for operating a light sheet microscope,
wherein based on selection information and/or a further information, in particular a further user input, one or more of the following microscope parameters are determined:
- a start point of a sampling movement by the one or more light sheets ;
- an end point of a sampling movement by the one or more light sheets;
- a distance between two adjacent light sheets;
- a velocity with which the volume is sampled by the one or more light sheets;
- an intensity with which a light sheet excites the volume.

A starting point and/or an end point of a sample range can in particular be determined directly if a coordinate system in user space is aligned to a sampling direction, e.g. a direction of a galvanometric mirror that provides the one or more light sheets.

A distance between two adjacent light sheets can in particular vary over the range by which the volume is sampled. For example, a distance can be smaller in case a part of a volume comprises higher complexity. In case of areas with lower complexity, a distance between two adjacent light sheets can be higher. Thereby, complexity can relate to an arrangement and organization of parts within the specimen. For example, in biological specimens, this could refer to a cellular structure, an organelle arrangement, and/or a presence of specialized structures within cells. In materials science, it might refer to an arrangement of molecules, crystals, or fibers.

A velocity with which a sample is sampled can in particular be tied to a needed or desired light exposure for a specific part of a specimen or for a whole specimen.

An embodiment of the first aspect of the present disclosure is related to a method for operating a light sheet microscope,
comprising the steps:
- obtaining a sampling configuration of the microscope for sampling the volume;
- displaying one or more effects of the sampling configuration at a human system interface in the user space.

A sampling configuration can relate to one or more of the following parameters: Start position, end position, sampling steps, velocity, and/or light exposure. Thereby, advantageously a user can see an impact of a specific configuration, of a parameter change and/or of various sampling configurations.

An embodiment of the first aspect of the present disclosure is related to a method for operating a light sheet microscope,
wherein the sampling configuration is obtained from a user, in particular via the human system interface.

A sampling configuration can in particular be provided together with a volumetric selection of a sampled specimen. This information can be, e.g., provided by a user over a human system interface.

A second aspect of the present disclosure is related to a device, in particular a light sheet microscope,
configured to:
- obtaining an image of a volume in a camera space wherein the image comprises a plurality of light sheet images that are based on light sheets that excited the volume and which were oblique relative to an optical axis of a primary lens of a microscope and that were emitted at different positions in the volume ;
- transforming the obtained image from the camera space to a user space , by mapping information from one or more light sheet images to one or more single-view focus planes ;
- displaying the volume in the user space at a user interface;
- receiving a selection information in the user space from the user interface about a part of the volume;
- retransforming the selection information from the user space to a camera space to a microscope;
- providing the retransformed selection information for capturing an image of the part of the volume .

A light sheet microscope according to the second aspect of this disclosure can in particular operate a method according to a first aspect of this disclosure. A light sheet microscope can comprise a computer to execute a transformation from camera space to user space, a transformation from user space to camera space, a provision of an image to a user interface and/or a determination of a selected image. This computer not necessarily needs to be next to the optical apparatus of the microscope. It can be an off-premises computer.

A device according to the second aspect of the present disclosure can also be a computational device that obtains data from a microscope and provides data to a (the) microscope. In a particular embodiment a network device can control a plurality of microscopes, by receiving information from one microscope about a specimen and then by re-transforming a selection information to a microscope hardware (camera space) of different microscopes. These microscope can differ such that a re-transformation from user space to camera space can be different for each controlled microscope. Thereby, a plurality of same/similar specimen can be analyzed based on a selection on a single human user interface.

An embodiment of the second aspect of the present disclosure is related to a device,
wherein the device is a light sheet microscope, and
wherein the light sheets are emitted and the image of the volume is obtained through the same primary lens.

In standard light sheet microscopy, a light sheet is perpendicular to an optical axis of a detection lens and provided by an additional lens. In light sheet microscopy with a single lens, light sheets can be emitted in an angle smaller than 90° to an optical axis of a primary lens and though this primary lens - without the need for an additional lens.

An embodiment of the second aspect of the present disclosure is related to a device,
wherein the device is a light sheet microscope comprising a galvanometer system with which the light sheets are directed to sample the image of the volume.

In oblique light sheet microscopy, either a single light sheet that moves through a specimen volume can be used or a plurality of light sheets can be emitted at different positions along a sampling range. This can be achieved with a movable specimen. Additionally or alternatively, the light sheet can be movable. This can be done by a Galvanometric mirror that either moves a single light sheet along/through a specimen volume or that focusses different light sheets at different positions along a specimen volume. By using a galvanometric mirror, fast light sheet movements are possible. The galvanometer can be controlled in order to achieve a desired position or velocity of a light sheet and/or a desired exposure of a part of a specimen volume.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates an oblique light sheet microscope.
Fig. 2 illustrates an operation of a light sheet microscope according to an embodiment of the present disclosure.
Fig. 3 illustrates an erection process according to an embodiment of the present disclosure.
Fig. 4 illustrates an erection process according to an embodiment of the present disclosure.
Fig. 5 illustrates an erection process according to an embodiment of the present disclosure.
Fig. 6 illustrates a selection process in a user space according to an embodiment of the present disclosure.
Fig. 7 illustrates a selection process in a user space according to an embodiment of the present disclosure.
Fig. 8 illustrates a selection process in a user space according to an embodiment of the present disclosure.
Fig. 9 illustrates microscope systems for embodiments of this disclosure.

In the following description reference is made to the accompanying figures which form part of the disclosure, and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

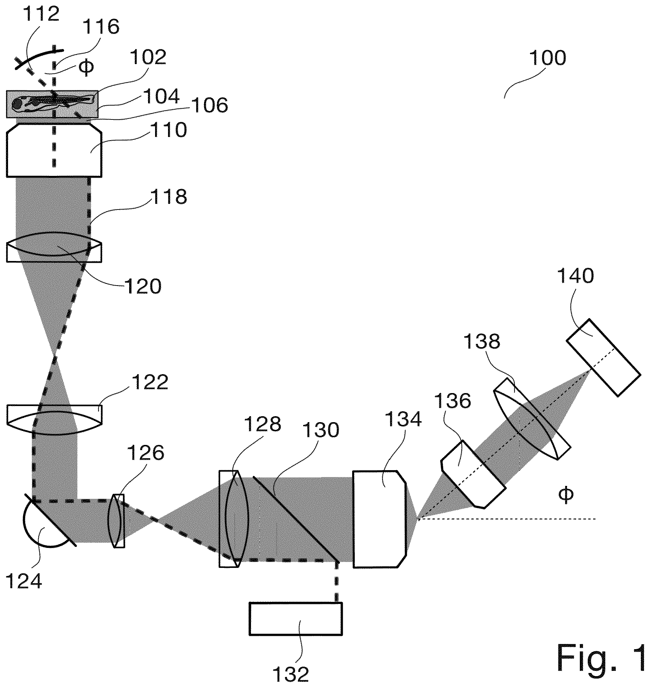

Fig. 1 illustrates an operation of an oblique light sheet microscope 100. The microscope observes a specimen volume 102 that is placed on a sample holder 104 that can comprise, e.g., a coverslip. Light sheets 112 are directed on the specimen 102 through a primary lens 110. The primary lens 110 is also configured to observe light 106 reflected from the specimen in order to sample the specimen 102. The reflected light is passed over through a chain of lenses 120, 122, 126, 128, 138 and via a secondary objective 134 and a tertiary lens 136 to be finally captured by a camera 140. Alternatively, the light provided by the tertiary lens 136 can also be observed by two cameras that are differently positioned. Then two different re-transformations may be necessary.

Light 118 for the light sheets 112 is sourced from an illumination module 132 and deflected into the optical system of the microscope via a dichroic mirror 130. Afterwards, it passes lenses 128, 126, 122, 120 to reach the primary lens 110. By the primary lens, the light sheets are focused on the specimen volume 102 by an angle φ relative to the optical axis 116. The light sheets are positioned via a galvanometric mirror 124 in order to sample the whole specimen 102 perpendicular to the optical axis 116 of the primary lens. The galvanometric mirror can run in a continuous motion in particular in combination with a rolling shutter. Alternatively, the mirror can focus light sheets at discrete positions. The latter alternative is slower as the first alternative, since the positions need to be adjusted, which takes time. On the other hand a rolling shutter needs a synchronization of mirror velocity with a velocity of active pixels of a camera sensor.

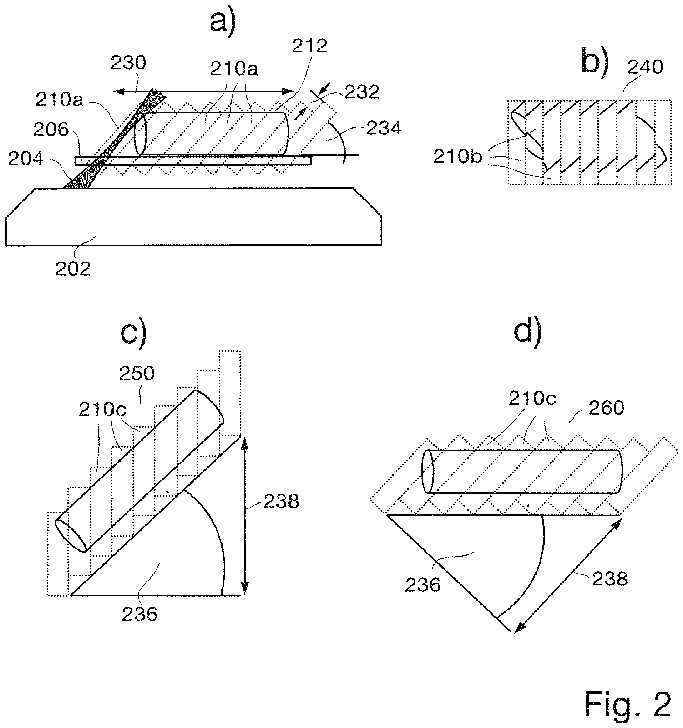

Fig. 2 illustrates an operation of a light sheet microscope according to an embodiment of the present disclosure. The figure comprises four subfigures a) - d) which show the process of an "erection" of a specimen volume illuminated by a plurality of light sheets.

Subfigure a) illustrates an object space, which is a situation during a sampling near a primary lens 202 of a microscope. Through the primary lens 202 an oblique light sheet 204 is cast on a part of a sample volume 212, which is arranged on a sample holder 206. Based on the illumination by the light sheet 204 of the part of the sample volume 212, a light sheet image 210a can be captured by the microscope. This is repeated by a plurality of light sheets cast along the scan axis 230. The different images 110a obtained are inclined to the plane of the sample holder by an angle φ (234). This inclination leads to a lateral shift (offset) 232 between two consecutive images.

Subfigure b) illustrates a camera space. A camera space can be a perspective of a microscope, which "sees" the specimen volume 212 through a plurality of images (sampling "points") and wherein each image uses light from an illumination by an oblique light sheet. The camera space can also be seen as representation of a sampled specimen on a sensor or in a memory. The light sheet images 210a are arranged next to each other as images 210b and result in an overall representation 240 of the specimen volume. This can be a representation in which the sampled information is stored in a memory. It can also be a representation in which the camera sensor captures the specimen. In camera space, the images 210b have no offset anymore. However, the information of the specimen 212 is not consistent for a user view. Parts of the specimen that belong together are not arranged together in camera space. Therefore, a camera space is not suitable for a user to analyze the specimen and to tune the microscope for further images.

Subfigure c) illustrates a first user space 250, in which the sampled information of the specimen 212 is transformed in order to achieve a user view perspective, i.e. a perspective in which a specimen is depicted physically consistent, albeit not necessarily exactly the same as in an object space. For a user space the information of the images 210b is transformed to images 210c, such that the content of the images 210c is consistent with a single view perspective. This can lead to a rotation 236 of the depicted specimen in user space compared to the specimen in object space such that one side of the specimen is laterally shifted by a distance 238. Furthermore, a transformed volume can be increased in size when depicted in user space. This will be explained in detail later.

Subfigure d) illustrates a further version of a user space 260, in which the image of subfigure c) of the user space is rotated around the angle 236. This has the advantage that the orientation of the specimen in user space is equal to the orientation of the specimen in the object space (subfigure a)). In other words, a user perceives a specimen in the same orientation in which the sample lies in front of the microscope.

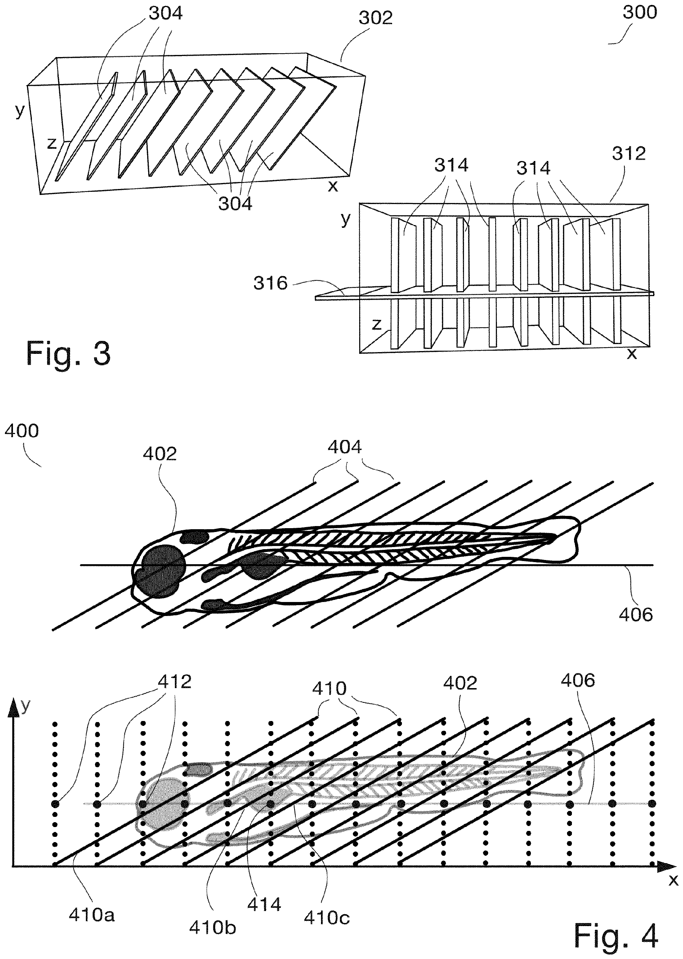

Fig. 3 illustrates an erection process 300 in three dimensions according to an embodiment of the present disclosure. A specimen is arranged in object space in a Cartesian reference system 302 comprising three orthogonal axes x, y, z. Based on a plurality of light sheets cast at different positions a plurality of obliquely sampled volumes 304 can be captured by a light sheet microscope camera.

A user space representation is depicted in the Cartesian reference system 312. Transforming the captured volumes 304 into a user space involves deskewing/straightening the obliquely recorded data 304. Thereby new straight ("erected") volumes 314 can be formed. Therefore, information (e.g. a voxel) at each position in a straight volume 314 is based on information of one or more obliquely sampled volumes 304. For example, a voxel in a straight volume 314 can be based on an interpolation of data from several obliquely sampled volumes that carry information for the respective position in a straight volume 314.

Based on the erected information 314, a focal plane 316 orthogonal to an optical axis of a primary lens can be selected.

Fig. 4 illustrates an erection process 400 in two dimensions according to an embodiment of the present disclosure. In the upper subfigure, a specimen 402 is sampled based on a plurality of oblique light sheets 404. A virtual focus plane, as would be seen by a widefield microscope, is depicted from the side as line 406.

In the lower subfigure an erection process is illustrated in two dimensions in an object space. The specimen 402 and the virtual focal place 406 are framed within Cartesian axes x, y. Nine images captured based on the nine light sheets 404 are illustrated via their center lines 410. Voxels 412, 414 and other voxels on the same line determine a single-view focus plane (in this case it is only a line, since only two dimensions x, y are depicted in the figure). The left voxels 412 can be inferred based on the first image (sample point) 41 0a. The most left voxel of the three voxels 412 has a long distance to the image 410a. Therefore, the image may not carry much information for this voxel and the voxel will remain rather dark. The right voxel of the three voxels 412 is located next to the first light sheet image 410a and may therefore be interpolated in good quality based on the first light sheet 410a alone. The voxel can be interpolated based on the shortest distance to the light sheet image 41 0a. The voxel 414 is located between the images 41 0b, 410c. Therefore, voxel 414 can be determined based on an interpolation based on images 410b and 410c.

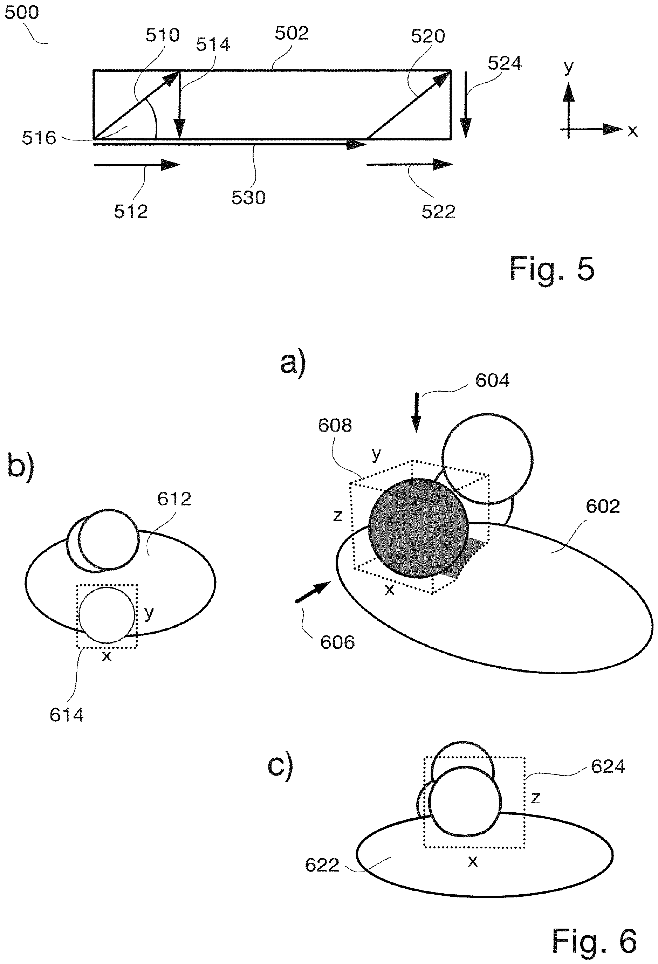

Fig. 5 illustrates an operation 500 of a light sheet microscope according to an embodiment of the present disclosure, in which details of a user space transformation are explained.

Illustrated by a rectangle is a sampled in user space volume in 502. A plane of a first light sheet 510 as emitted by a microscope within a sample operation is depicted within the volume 502. The light sheet is oblique with an angle 516, with a projected width 512, e.g. 150 µm, in an x-direction of a Cartesian coordinate system and a projected height 514, e.g. 132 µm, in y-direction. A plane of a last light sheet 520 of the sampling operation has a projected width 522 in x-direction and a projected height 524 in y-direction. The values of the last light sheet 520 can be equal or at least similar to the dimensional values of the first light sheet 510.

The sample operation is conducted with a galvanometric mirror that has an operation width 530, e.g. 354 µm. The sum of the operation with 530 and of the projected width 512 (or 522) provide the total length of the sampled volume in user space. Hence, due to the oblique sampling, a sampled volume that us 354 µm in object space (e.g. because of maximum scan range) is 354 µm + 150 µm = 504 µm long in user space.

Although it would be possible to constrain the volume in user space such that it matches the width of the volume in camera space. However, that would mean to discard information which has been sampled and which might has caused damage to the samples volume due to phototoxicity. On the other hand, using all sampled information might lead to empty parts in particular in the corners of the sampled volume.

Fig. 6 illustrates a selection process in a user space according to an embodiment of the present disclosure. Subfigure a) illustrates a sampled specimen volume 602. The sampled volume can be in particular a maximal sampling volume, i.e. the illustrated volume is based on a maximal scan range of a light sheet microscope. Furthermore, subfigures b) and c) depict a two-dimensional projection of the volume 602 each.

Subfigure b) depicts a projection of an xy-plane 612. The xy-plane-projection 612 corresponds to a viewpoint 604 of the 3D-volume 602. Subfigure c) depicts a projection of an xz-plane 622. The xz-plane-projection 622 corresponds to a viewpoint 606 of the 3D-volume 602. Both projections 612, 622 are illustrated by a human system interface (HSI) to a user. Also the full volume 602 can be illustrated by the HSI. The ROIs 614, 624 in the projected planes and the resulting ROI 608 in the volume are depicted by the HSI as well.

The user can now indicate specific areas, in particular rectangular areas in the projections 612, 622. Thereby, the user can define a ROI 608 within the sampled volume 602. Since the user indicates this information in user space, the user needs not to consider an inclination of the light sheets, an angle to the detection plane, and/or a sampling range, e.g. a range of a galvanometric mirror, for sampling the specimen.

After the user has selected the desired information, the selected information is retransformed automatically from the user space to the camera space of the microscope that is used for the sampling. The microscope needs not to be located at the same premises as the computer that runs the software for transforming and/or depicting the sampled volume 502 and/or the retransformation of the selected information. Based on the retransformed selected information, a selected volume can be sampled. Advantageously, a sampling time can be reduced by sampling only a part of a certain specimen volume.

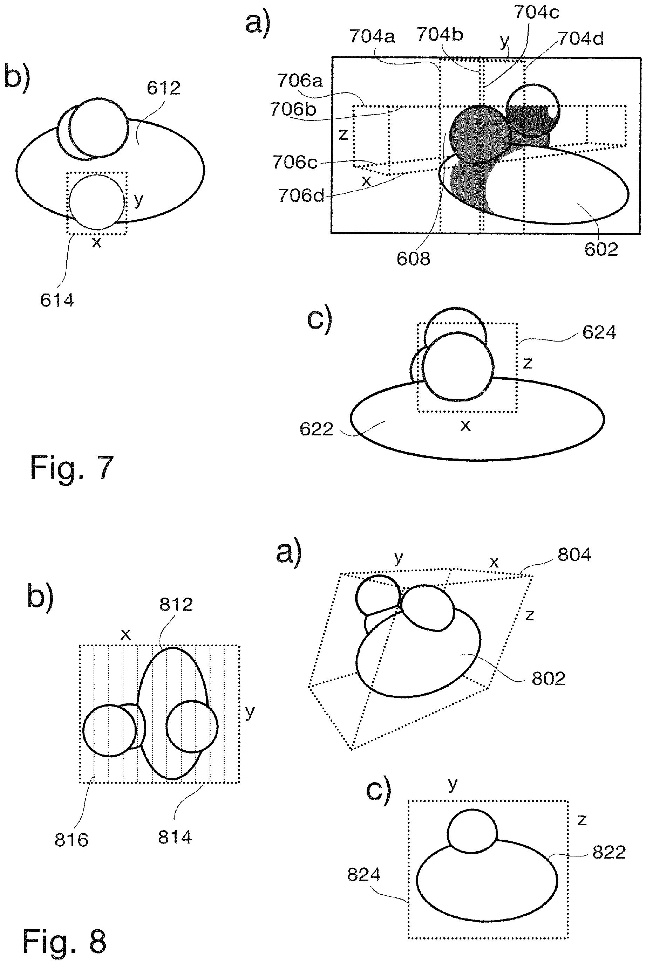

Fig. 7 illustrates the selection process of Fig. 6 in user space in more detail. Subfigure a) illustrates the sampled maximal specimen volume 602 and subfigures b) and c) depict the two-dimensional projections 612, 622 of the volume 602. The identified regions of interests (ROIs) 614, 624 in the xy-plane and in the xz-plane are indicated regions in the projected planes. Based on the ROIs, two auxiliary volumes are extrapolated. Each auxiliary volume has a rectangular shape because the indicated ROIs 614, 624 are rectangular as well. The first auxiliary volume that is based on the selected ROI of subfigure b) is defined by its corners 704a, 704b, 704c, 704d. The second auxiliary volume that is based on the selected ROI of subfigure c) is defined by its corners 706a, 706b, 706c, 706d. The selected volume 608 is determined based on be the intersection of the two auxiliary volumes.

Based on the identified volume, the correct ROI in camera space for the oblique light sheet and the scanning distance as well as the start and end point of the movement of a galvanometric mirror can be calculated using the light sheet angle. The resulting light sheet volume can in particular comprise a minimum number of light sheets required to capture a selected volume 602 in an object space.

Fig. 8 illustrates a selection process in a user space according to an embodiment of the present disclosure. Similar to Figs. 6 and 7, subfigure a) illustrates a sampled maximal specimen volume 802 and subfigures b) and c) depict two-dimensional projections 812; 822 of the volume 802. In this case, the ROIs are selected based on projected planes xy and yz, as in the embodiments of the previous figures. However, the ROIs 814, 824 are larger than in the embodiment of the previous figures resulting in a larger 3D-ROI 804 volume. Additionally, in the xy-projection 812 in the ROI selection, planes 816 of light-sheet-based images (i.e. of sampling points) are indicated. In particular, these light-sheet-based planes can vary dependent on the configuration of sampling parameters, such as distance between two adjacent sampling points, velocity of a light sheet, exposure time, etc.

Basically, a pixel can be a step or a distance of a galvanometric mirror movement during an exposure time. If a larger step size or a larger speed of the galvanometric mirror is selected, it might be desirable to visualize the spatial scan of the sample again with the new settings so that the user can judge whether this is suitable for a current sample.

Some embodiments relate to a microscope comprising a system as described in connection with one or more of the Figs. 1 to 8. Alternatively, a microscope may be part of or connected to a system as described in connection with one or more of the Figs. 1 to 8.

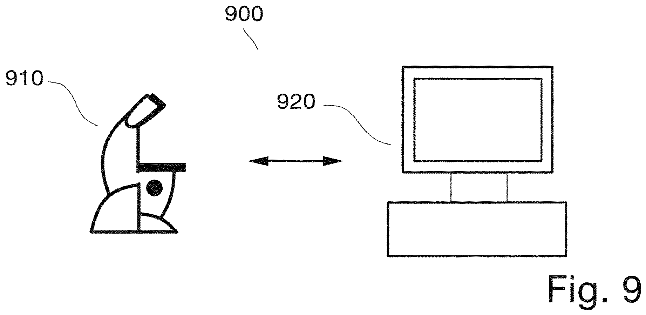

Fig. 9 shows a schematic illustration of a system 900 configured to perform a method described herein. The system 900 comprises a microscope 910 and a computer system 920. The microscope 910 is configured to take images and is connected to the computer system 920. The computer system 920 is configured to execute at least a part of a method described herein. The computer system 920 may be configured to execute a machine learning algorithm. The computer system 920 and microscope 910 may be separate entities but can also be integrated together in one common housing. The computer system 920 may be part of a central processing system of the microscope 910 and/or the computer system 920 may be part of a subcomponent of the microscope 910, such as a sensor, an actor, a camera or an illumination unit, etc. of the microscope 910.

The computer system 920 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 920 may comprise any circuit or combination of circuits. In one embodiment, the computer system 920 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 920 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 920 may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system 920 may also include a display device, one or more speakers, and a keyboard and/or controller, which can include a mouse, trackball, touch screen, voice-recognition device, or any other device that permits a system user to input information into and receive information from the computer system 920.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus."

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: oblique light sheet microscope
- 102: specimen volume
- 104: sample holder
- 106: reflected light
- 110: primary lens
- 112: light sheets
- 116: optical axis of primary lens
- 118: light for light sheets
- 120: first tube lens
- 122: first scan lens
- 124: galvo mirror
- 126: second scan lens
- 128: second tube lens
- 130: dichroic mirror
- 132: illumination module
- 134: secondary objective
- 136: tertiary objective
- 138: third tube lens
- 140: camera
- 202: primary lens
- 204: oblique light sheet
- 206: sample holder
- 210a: light sheet image
- 210b: images in camera space
- 212: sample volume
- 230: scan axis
- 232: image offset
- 234: angle of light sheets
- 236: rotation in user space
- 238: shifted distance
- 240: overall representation of specimen
- 250: first user space
- 260: second user space
- 300: erection process
- 302: object space Cartesian reference system
- 304: sampled volumes
- 312: user space Cartesian reference system
- 314: erected volumes
- 316: selected focal plane
- 400: erection process
- 402: specimen
- 404: oblique light sheet
- 406: virtual focus plane
- 410: light sheet images
- 410a: first sample point
- 410b: middle image
- 410c: middle image
- 412: left voxels
- 414: voxel
- 500: user space transformation
- 502: user space volume
- 510: first light sheet
- 512: projected width
- 514: projected height
- 516: angle
- 520: last light sheet
- 522: projected width
- 524: projected height
- 530: sampling range
- 602: maximal sample volume
- 604: viewpoint xy perspective
- 606: viewpoint xz perspective
- 608: ROI
- 612: xy projection
- 614: ROI
- 622: xz projection
- 624: ROI
- 704a: left front corner
- 704b: right front corner
- 704c: left rear corner
- 704d: right rear corner
- 706a: upper rear corner
- 706b: upper front corner
- 706c: lower rear corner
- 706d: lower front corner
- 802: maximal sample volume
- 804: selected
- 812: projection of volume
- 814: ROI
- 816: light sheet image planes
- 822: projection of volume
- 824: ROI
- 900: microscope system
- 910: microscope
- 920: computer

## Claims

1. A method for operating a light sheet microscope,
comprising the steps:
- capturing an image (240) of a volume (212, 608) in a camera space (240) by exciting the volume with one or more light sheets (204) that are oblique relative to an optical axis of a primary lens of a microscope and that are emitted at different positions (210a) in the volume (212) and by capturing a light sheet image (210b) for each of the one or more exciting light sheets;
- transforming the captured image (240) from the camera space (240) to a user space (250, 260), by mapping information from one or more light sheet images to one or more single-view focus planes (412);
- displaying the volume in the user space (250, 206, 602) at a user interface;
- receiving a selection information (614, 624) in the user space from the user interface about a part (608) of the volume (212, 602);
- retransforming the selection information (614, 624) from the user space (250, 260) to the camera space (240) to control the microscope capturing an image based on the selection information (614, 624);
- capturing a selected image about the part (608) of the volume (212, 602).

2. The method of claim 1,
wherein the camera space (240) is based on the one or more of light sheets (204) that are oblique with a pre-defined angle φ to an optical axis (116) of a primary lens (110), which captures light from the volume (102, 212).

3. The method according to one of the preceding claims,
wherein the one or more light sheets (204) are emitted in a regular position-based pattern.

4. The method according to one of the preceding claims,
wherein the one or more light sheets (204) are emitted in a non-regular position-based pattern.

5. The method according to one of the preceding claims,
wherein the user space (250, 260) is based on one or more of the parameters:
- an angle between a light sheet (204) and an optical axis (116) of a primary lens (110) ;
- a distance between two adjacent light sheets (204) ;
- a velocity with which the volume (212) is sampled based on one or more light sheets.

6. The method according to one of the preceding claims,
comprising the step:
- transforming information from camera space (240) to user space (250, 260) such an emitted light sheet (204) and a focal plane of a user space (406) differ about an angle smaller than 90°.

7. The method according to one of the preceding claims,
comprising the steps:
- mapping the user space (204) in a three-dimensional Cartesian coordinate system;
- displaying an xy-plane (612) of the coordinate system, in particular as a maximum intensity projection;
- receiving a selection (614) of a user within the xy-plane.

8. The method according to the preceding claim,
comprising the steps:
- mapping the user space (204) in a three-dimensional Cartesian coordinate system;
- displaying an xz-plane (622) of the coordinate system, in particular as a maximum intensity projection;
- receiving a selection information (624) of a user within the xz-plane.

9. The method according to the preceding claim,
wherein one or more parameters of a microscope, in particular a light sheet sampling range (816), is depicted in the user space (250, 260).

10. The method according to one of the preceding claims,
wherein based on selection information (612, 624) and/or a further information, in particular a further user input, one or more of the following microscope parameters are determined:
- a start point of a sampling movement by the one or more light sheets (204);
- an end point of a sampling movement by the one or more light sheets;
- a distance between two adjacent light sheets;
- a velocity with which the volume is sampled by the one or more light sheets;
- an intensity with which a light sheet excites the volume.

11. The method according to one of the preceding claims,
comprising the steps:
- obtaining a sampling configuration of the microscope for sampling the volume;
- displaying one or more effects of the sampling configuration at a human system interface in the user space.

12. The method according to the preceding claim,
wherein the sampling configuration is obtained from a user, in particular via the human system interface.

13. A device, in particular a light sheet microscope,
configured to:
- obtaining an image of a volume (212) in a camera space (240) wherein the image comprises a plurality of light sheet images that are based on light sheets that excited the volume and which were oblique relative to an optical axis of a primary lens of a microscope and that were emitted at different positions (210a) in the volume (212);
- transforming the obtained image (240) from the camera space (240) to a user space (250, 260), by mapping information from one or more light sheet images to one or more single-view focus planes (412);
- displaying the volume (212) in the user space (240, 602) at a user interface;
- receiving a selection information (614, 624) in the user space (240) from the user interface about a part (608) of the volume;
- retransforming the selection information from the user space to a camera space to a microscope;
- providing the retransformed selection information for capturing an image of the part (608) of the volume (602).

14. The device according to the preceding claim,
wherein the device is a light sheet microscope (100), and
wherein the light sheets are emitted and the image of the volume is obtained through the same primary lens (110).

15. The device according to one of the preceding claims,
wherein the device is a light sheet microscope (100) comprising a galvanometer system with which the light sheets are directed to sample the image of the volume.
